(19) Europäisches Patentamt

European Patent Office

Office européen des brevets

(11) Veröffentlichungsnummer: **0 517 051 A1**

## (12) EUROPÄISCHE PATENTANMELDUNG

(21) Anmeldenummer: **92108732.6**

(22) Anmeldetag: **23.05.92**

(51) Int. Cl.5: **C02F 1/54**, D21H 17/41

(30) Priorität: **06.06.91 DE 4118544**

(43) Veröffentlichungstag der Anmeldung:
**09.12.92 Patentblatt 92/50**

(84) Benannte Vertragsstaaten:
**AT BE DE FR GB IT NL**

(71) Anmelder: **BAYER AG**

**W-5090 Leverkusen 1 Bayerwerk(DE)**

(72) Erfinder: **Wegner, Christian, Dr.**
**Miltzstrasse 13**
**W-5000 Köln 80(DE)**

(54) **Verfahren zur Entfernung disperser Phasen aus Abwässern.**

㊼ Disperse Phasen weden aus Abwässern entfernt, indem man durch Polymerisation vinylhaltiger Monomerer hergestellte Kautschuk-Latices und mindestens 2-wertige Kationen und/oder positive Ladungen tragende Kautschuk-Latices zufügt.

EP 0 517 051 A1

Die vorliegende Erfindung betrifft ein Verfahren zur Entfernung von suspendierten flüssigen und/oder dispergierten festen Phasen aus Abwässern.

Die Reinigung von Abwässern gewinnt zunehmend größere Bedeutung, insbesondere, da die Kapazität von öffentlichen und industriellen Kläranlagen immer knapper wird. Die Entfernung von in Wasser suspendierten organischen Phasen kann durch Zusatz von Flockungsmitteln, sogenannten Emulsionsspaltern, erfolgen.

Als anorganische Emulsionsspalter kommen beispielsweise Salze mehrwertiger Metalle in Frage, wie Aluminiumchlorid, Aluminiumsulfat, Eisen(III)-sulfat, Calciumchlorid und Calciumoxid. Als organische Emulsionsspalter sind anionische, kationische und nichtionische Typen bekannt. Anionische Emulsionsspalter sind beispielsweise Polyacrylamide und Acrylester/(Meth)Acrylsäure-Copolymerisate mit hohen Molmassen.

Organische kationische Emulsionsspalter sind z.B. synthetische Polymere auf der Basis von Polyaminen, Polyiminen, Polyetherpolyaminen, quaternierten Polyamidaminen und kationischen Copolymeren aus Acrylamid mit kationischen Monomeren oder Oligomeren und Homopolymerisate von Dimethyldiallylammoniumchlorid.

Gemäß der US-PS 3 485 752 und der US-PS 3 493 501 können auch nichtionische, anionische oder kationische Latices zur Aufarbeitung von disperse Phasen enthaltendem Wasser eingesetzt werden, ohne sie auszufällen. Sie zeigen einen gewissen Effekt bei der Flokkulation von Feststoffen. Ihre Wirksamkeit für die Entfernung von in Wasser suspendierten Flüssigkeiten ist unter den heutzutage geforderten Bedingungen an die Reinheit eines geklärten Wassers nicht ausreichend.

In der JP-OS 50/41354 (JP-Anmeldung Nr. 48/91 588) wird die Kombination von zwei organischen Fällungsmitteln beschrieben. Es werden ein organisches makromolekulares Flockungsmittel und ein Kautschuk-Latex eingesetzt, der durch Zugabe von mindestens 2-wertigen Kationen ausgefällt wird. Bevorzugt wird dieses Verfahren zur Reinigung von Abwässern angewendet, die bei der Herstellung dieser Kautschuk-Latices selbst anfallen. Im Vergleich zu den anorganisch/organischen Kombinationsverfahren hat dieses Vorgehen den Vorteil, daß hier keine mit Ölen belasteten anorganischen Abfälle anfallen, die nicht brennbar sind. Nachteilig ist jedoch, daß zu dem zu entölenden Abwasser zwei Komponenten in abgestimmter Weise zu dosieren sind. Auch die Optimierung eines 2-Komponentensystems ist, insbesondere bei Abwässern, deren Zusammensetzung sich in Abhängigkeit von der Zeit ändert, sehr aufwendig. Hinzu kommt, daß die beiden Komponenten nicht gemeinsam dosiert werden können, da die eingesetzten Kautschuk-Latices mit den kationischen Polymeren unverträglich sind.

Es wurde nun ein Verfahren zur Entfernung von dispersen Phasen aus Abwässern gefunden, das dadurch gekennzeichnet ist, daß man dem Abwasser durch Polymerisation vinylhaltiger Monomere hergestellte Kautschuk-Latices und mindestens 2-wertige Kationen und/oder positive Ladungen tragende Kautschuk-Latices zugefügt.

Die vorliegende Erfindung zeichnet sich besonders dadurch aus, daß es mit ihrer Hilfe gelingt aus Abwässern suspendierte flüssige und/oder dispergierte feste Phasen nahezu vollständig zu entfernen. Sie stellt deshalb eine wertvolle Ergänzung zu den bekannten Verfahren zur Abwasseraufbereitung dar, welche oft nur eine unzureichende Abtrennung suspendierter flüssiger und/oder dispergierter fester Phasen erbringen und/oder zu einem Anfall von unbrennbaren anorganisch/organischen Schlämmen führen, die nur mit großem Aufwand umweltgerecht beseitigt werden können.

Bei den erfindungsgemäß zu verwendenden, durch Polymerisation vinylhaltiger Monomere hergestellten Kautschuk-Latices kann es sich um nach bekannten Verfahren polymerisierte vinylhaltige Monomere handeln. Unter vinylhaltigen Monomeren werden hier auch konjugierte 1,3-Dienverbindungen verstanden. Als Polymerisationsverfahren zur Herstellung solcher Kautschuk-Latices ist insbesondere die Emulsionspolymerisation bevorzugt. Beispiele für Polymerisate aus vinylhaltigen Monomeren sind Homopolymerisate und Copolymerisate aus Styrol, Styrol und Acrylnitril, Vinylchlorid, Vinylacetat, Acrylsäureestern, Methacrylsäureestern, Butadien (z.B. sogenannte BR-Latices), Butadien und Styrol (z.B. sogenannte SBR-Latices) und Butadien-Styrol-Acrylnitril-Pfropfmischpolymerisate (z.B. sogenannte ABS-Latices).

Für das erfindungsgemäße Verfahren sind Butadienhomopolymerisate und Copolymerisate aus Butadien und Styrol und/oder Acrylnitril bevorzugt. Besonders bevorzugt sind Styrol enthaltende Copolymerisate, die zusätzlich Carboxylgruppen in Form von Alkali- und/oder Aminsalzen enthalten, wie sie z.B. durch die Einpolymerisation von Acryl- und/oder Methacrylsäureeinheiten zugänglich sind.

Besonders bevorzugte Butadien-Styrol-Acryl/Methacryl-Copolymerisate enthalten 0 bis 80 Gew.-% Styrol, 0,1 bis 20 Gew.-% Acryl- und/oder Methacrylsäureeinheiten und 20 bis 90 Gew.-% Butadien. Anstelle der Acryl- und/oder Methacrylsäureeinheiten oder zusätzlich dazu können auch andere Vinylgruppeneinheiten tragende Monomere eingesetzt worden sein, z.B. Maleinsäure, Fumarsäure und/oder Itaconsäure.

Wenn man einen durch Emulsionspolymerisation gewonnenen Kautschuk-Latex verwendet, kann dieser, je nach Bedarf mit Wasser auf eine beliebige Konzentration verdünnt werden. Man kann verschiedene Latices jeweils alleine oder auch Gemische mehrerer Latices verwenden.

Die zu verwendenden, mindestens 2-wertigen Kationen kommen vorzugsweise als anorganische Salze zum Einsatz. Beispiele sind Magnesiumchlorid, Magnesiumsulfat, Calciumchlorid, Zinkchlorid, Eisen(II)-sulfat, Eisen(II)-chlorid, Aluminiumsulfat, Alkalialuminiumalaune, Alkalieisenalaune und Aluminiumchlorid. Bevorzugt sind Eisen-, Calcium- und Aluminiumverbindungen. Vorzugsweise werden solche Salze in Form einer wäßrigen Lösung eingesetzt.

Der Zusatz der mindestens 2-wertigen Kationen ist auch durch Verwendung von in Wasser wenig löslichen Verbindungen möglich, die jedoch hinreichend Kationen freisetzen, um die Ausfällung der Latices zu bewirken. Beispiele solcher Verbindungen sind Calciumhydroxid und Calciumoxid, auch sogenannte Kalkmilch.

Die Zugabe von mindestens 2-wertigen Kationen kann gegebenenfalls ganz oder teilweise durch die Zugabe von kationisch geladenen Latices ersetzt werden. Als kationische Latices kommen wiederum z.B. Butadienhomopolymerisate und Copolymerisate aus Butadien, Styrol und/oder Acrylnitril infrage, wobei die kationischen Ladungen durch Einpolymerisation kationische Gruppen tragender Vinylmonomerer erzeugt werden können. Die Ausfällung der durch Polymerisation vinylhaltiger Monomere hergestellten Kautschuk-Latices kann auch durch eine Zugabe von mindestens 2-wertigen Kationen und kationisch geladenem Latex erreicht werden. In einer bevorzugten Verfahrensvariante wird dabei der kationisch geladene Latex in unterstöchiometrischer Menge zudosiert und anschließend durch überschüssige Zugabe eines mindestens 2-wertigen Kations die Fällung vervollständigt.

Das erfindungsgemäße Verfahren ist geeignet, in Wasser nicht gelöste Stoffe zu entfernen. Es kann sich hierbei sowohl um dispergierte Feststoffe, z.B. um Tone, Cellulosefasern, Pigmente und/oder Kohleteilchen handeln, als auch um suspendierte, mit Wasser nicht mischbare Flüssigkeiten, z.B. um aromatische, aliphatische und/oder araliphatische Kohlenwasserstoffe, natürliche und/oder synthetische Öle, Fette und Ester, z.B. um Weichmacher. Auch in Wasser unlösliche Polyether, z.B. Polypropylenoxide, Tetrahydrof-uranpolymerisate, polymerisierte $\alpha$-Olefinepoxide, polymerisierte Styrolepoxide und Ethylenoxid enthaltende Mischpolymerisate können nach dem erfindungsgemäßen Verfahren aus Abwasser entfernt werden, ebenso in Wasser dispergierte Emulgatoren anionischer, kationischer oder neutraler Natur, wie ethoxylierte Nonylphenole. Auch Gemische aus den vorgenannten Stoffen können entfernt werden. Besonders geeignet ist das erfindungsgemäße Verfahren für die Aufarbeitung von Prozeßflüssigkeiten, wie sie z.B. in der Metallindustrie als Kühlschmierstoffemulsion, Walzöl, Polieröl und zur Blechentfettung eingesetzt werden, wie sie in Abwässern aus Lackierereien und Färbereien und/oder in Abwässern bei der Papierherstellung anfallen.

Das erfindungsgemäße Verfahren ist insbesondere dafür geeignet, geringe Anteile an in Wasser unlöslichen Fremdstoffen zu entfernen, z.B. Anteile von unter 1 Gew.-%. Es ist daher häufig vorteilhaft, hohe Anteile an unlöslichen Fremdstoffen zunächst nach bekannten Verfahren aus dem Abwasser zu entfernen und dann für die Entfernung noch vorhandener Reststoffe das erfindungsgemäße Verfahren anzuwenden.

Das erfindungsgemäße Verfahren ist auch geeignet, Stoffe aus dem Wasser zu entfernen, die dort so fein dispergiert sind, daß sie scheinbar als Lösung vorliegen, z.B. Dispersionsfarbstoffe, wie sie z.B. in Abwässern der Textilfärbung anfallen.

In bestimmten Fällen werden bei Durchführung des erfindungsgemäßen Verfahren auch in Wasser gelöste Stoffe adsorbiert, z.B. Huminsäuren.

Das erfindungsgemäße Verfahren kann man beispielsweise wie folgt durchführen:

Das eine suspendierte flüssige und/oder dispergierte feste Phase enthaltende Wasser wird unter Rühren vorgelegt und ein wäßriger, nicht kationisch geladener Latex der oben beschriebenen Art wird langsam unter Rühren zugegeben. Dann wird die wäßrige Lösung eines mindestens 2-wertigen Kations zugefügt. Man rührt nach, beispielsweise mindestens 15 Minuten, und trennt dann die ausgefällten Latexflocken, welche die abgetrennten Phasen mitgerissen haben, durch Filtration, Flotation oder ein anderes mechanisches Trennverfahren ab.

Man kann in das erfindungsgemäße Verfahren beispielsweise soviel des durch Polymerisation vinylhaltiger Monomerer hergestellten Kautschuk-Latexes einsetzen, daß das Verhältnis von Feststoffanteilen im jeweiligen Latex zum zu entfernenden Stoff beispielsweise 0,1 bis 20 Gew.-% beträgt. Bevorzugt liegt dieses Verhältnis bei 0,5 bis 10 Gew.-%. Die Menge des mindestens 2-wertigen Kations und/oder des kationisch geladenen Latexes wird insgesamt zweckmäßigerweise mindestens so hoch gewählt, daß der ursprünglich eingesetzte Latex ausfällt, vorzugsweise vollständig ausfällt. Im allgemeinen erreicht man gute Ergebnisse, wenn man bezogen auf zu reinigendes Abwasser mindestens 2 000 ppm mindestens 2-wertiger Kationen hinzufügt.

Das erfindungsgemäße Verfahren kann gegebenenfalls mit anderen Verfahren zur Abwasserreinigung kombiniert werden. Bevorzugt ist dabei die Kombination mit weiteren Substanzen, die mit mindestens 2-wertigen Kationen Niederschläge bilden, wie Dispersionen anderer organischer Polymerer, insbesondere anionischer Polymerer (z.B. Polyurethandispersionen), wie die Dispersionen von Alkydharzen, die z.B. als wasserbasische Beschichtungsmittel eingesetzt werden, und wie Silicondispersionen. Besonders bevorzugt ist die Kombination mit Carbonsäuren, die mit mindestens 2-wertigen Kationen schwerlösliche Niederschläge bilden. Solche Carbonsäuren können monomer, oligomer oder polymer sein. Da Latexniederschläge manchmal dazu neigen bei ihrer mechanischen Abtrennung durch Filtration die Filter zu verstopfen, können bei der Mitverwendung von Carbonsäuren diese auch als reaktive Filtrierhilfsmittel fungieren. Man kann jedoch gegebenenfalls auch bekannte Filtrierhilfsmittel, vorzugsweise Produkte auf organischer Basis, die bei der Verbrennung keine Rückstände hinterlassen (z.B. Zellstoffmehl), einsetzen.

Das erfindungsgemäße Verfahren kann in vielfältiger Weise variiert werden. So kann es beispielsweise bei Temperaturen im Bereich von 5 bis 90°C und Drucken im Bereich von 1 bis 200 bar durchgeführt werden. Ebenso kann die Reihenfolge des Zusatzes von Latex und mindestens 2-wertigen Kationen und/oder kationisch geladenen Latices umgekehrt wie oben beschrieben oder auch simultan erfolgen.

Mit dem erfindungsgemäßen Verfahren gelingt es auf einfache Weise disperse Phasen aus Abwässern zu entfernen. Eine genaue Dosierung mehrerer Komponenten ist nicht nötig, denn der eingesetzte, durch Polymerisation vinylhaltiger Monomerer hergestellte Kautschuk-Latex kann, bezogen auf die disperse Phase, im Überschuß eingesetzt werden, ebenso die zur Koagulation dieses Latex einzusetzenden, mindestens 2-wertigen Kationen und/oder der positive Ladungen tragenden Kautschuk-Latex. Beim Einsatz letzter werden außerdem Probleme mit Salzen vermieden.

Die folgenden Beispiele erläutern die Erfindung weiter.

## Beispiele

Allgemeines:

Teile und Prozente beziehen sich auf das Gewicht, soweit nichts anderes angegeben ist.

Für die folgenden Beispiele wurden folgende Kautschuk-Latices eingesetzt:

A: Ein Acrylnitril/Butadien-Latex aus 28 Teilen Acrylnitril und 72 Teilen Butadien mit einem Feststoffgehalt von 45 Gew.-%, einer Viskosität (nach Brookfield) von 20 mPas und einem Deformationswert von 18 N.

B: Ein Acrylnitril/Butadien-Latex aus 30 Teilen Acrylnitril, 68 Teilen Butadien und 2 Teilen Methacrylsäure mit einem Feststoffgehalt von 50 Gew.-%, einer Viskosität (nach Brookfield) von 32 mPas und einem Deformationswert von 10 N.

C: Ein Acrylnitril/Butadien-Latex aus 30 % Acrylnitril, 66 % Butadien und 4 % Methacrylsäuregruppen mit einem Feststoffgehalt von 45 Gew.-%, einer Viskosität (nach Brookfield) von 50 mPas und einem Deformationswert von 10 N.

D: Ein Styrol/Butadien-Latex aus 28 Teilen Styrol und 72 Teilen Butadien mit einem Feststoffgehalt von 67 Gew.-%, einer Viskosität (nach Brookfield) von 500 mPas und einem Deformationswert von 40 N.

E: Ein Styrol/Butadien-Latex aus 45 Teilen Styrol, 51 Teilen Butadien und 4 Teilen Methacrylsäure mit einem Feststoffgehalt von 50 Gew.-% und einer Viskosität (nach Brookfield) von 110 mPas.

F: Ein Styrol/Butadien-Latex aus 40 Teilen Styrol, 55 Teilen Butadien, 2 Teilen Methacrylsäure und 3 Teilen N-Methoxymethylmethacrylsäureamid mit einem Feststoffgehalt von 43 Gew.-%, einer Viskosität (nach Brookfield) von 20 mPas und einem Deformationswert von über 100 N.

G: Ein Butadienhomopolymerisat mit einem Feststoffgehalt von 42 Gew.-% und einer Viskosität (nach Brookfield) von 19 mPas.

Gesamtextrahierbare Kohlenwasserstoffe wurden nach Extraktion mit Tetrachlorkohlenstoff IR-spektroskopisch bei einer Wellenzahl von 3000 $\mu m^{-1}$ bestimmt.

Restkohlenwasserstoffgehalte wurden nach DIN 38 409, Teil 18, bestimmt; CSB-Werte nach DIN 38 409, Teil 41.

## Beispiel 1

Reinigung einer wasserbasischen Kühlschmieremulsion

Jeweils 500 ml einer Kühlschmieremulsion, die 775 ppm gesamtextrahierbare Kohlenwasserstoffe enthielt wurden auf 50°C erhitzt und einmal mit 2000 ppm Latex E und einmal mit 2000 ppm Latex D versetzt. Anschließend wurden je 5 ml einer 40 %igen Calciumchloridlösung zugetropft.

Es wurde jeweils eine halbe Stunde nachgerührt und anschließend über ein feines Drahtfilter abfiltriert. Bei beiden ausgefällten Latices hinterblieb eine klare wäßrige Phase als Filtrat, während die Kühlschmieremulsion vor der Aufarbeitung eine milchig trübe Emulsion darstellte. In der klaren wäßrigen Phase wurden folgende Abwasserwerte ermittelt:

| Latexzusatz | Gesamtextrahierbare Kohlenwasserstoffe (mg/l) | Restkohlenwasserstoff (mg/l) | CSB-Wert (mg/l) |
|---|---|---|---|
| kein Zusatz | 775 | 130 | 3670 |
| Latex D | 35 | < 1 | 1290 |
| Latex E | 25 | < 1 | 876 |

Beispiel 2

Reinigung einer wasserbasischen Kühlschmieremulsion

Aus einer Kühlschmieremulsion, die 2400 ppm Restkohlenwasserstoffe enthielt, wurde zunächst nach einem bekannten Verfahren mit einem kationischen Polymer als Flockungsmittel der größte Teil des Schmieröls entfernt. Danach wurde die verbleibende wäßrige Phase wie in Beispiel 1 beschrieben behandelt. Nach Filtration der ausgefällten Latices wurde jeweils eine klare Lösung erhalten, während die Emulsion vor der Spaltung mit dem kationischen Polymer milchig trübe war. Es wurden folgende Restkohlenwasserstoffgehalte in der nach der Abtrennung der Latices vorliegenden wäßrigen Phase ermittelt:

| Latexzusatz | Restkohlenwasserstoff (mg/l) |
|---|---|
| kein Zusatz | 100 |
| Latex A | 10 |
| Latex C | 12 |
| Latex D | 7 |
| Latex E | 4 |
| Latex F | 4 |
| Latex G | 11 |

Beispiel 3

Reinigung eines Entfettungsbades

Es wurde verfahren wie in Beispiel 1, jedoch ein wasserbasisches Entfettungsbad, wie es in der metallverarbeitenden Industrie eingesetzt wird und die Latices B und E eingesetzt. Folgende Abwasserwerte wurden erhalten:

| Latexzusatz | Gesamtextrahierbare Kohlenwasserstoffe (mg/l) | Restkohlenwasserstoff (mg/l) | CSB-Wert (mg/l) |
|---|---|---|---|
| kein Zusatz | 68 | 60 | 1635 |
| Latex B | <1 | <1 | 488 |
| Latex E | <1 | <1 | 403 |

Beispiel 4

Reinigung eines mit einem Polyether verunreinigten Wassers

Ein Wasser, welches 1000 ppm eines auf Propylenglykol gestarteten Polyethers, bestehend aus 87 %

5

Propylenoxid und 13 % Ethylenoxid, enthielt, wurde wie in Beispiel 1 angegeben behandelt, wobei die Latices E und G eingesetzt und folgende Abwasserwerte erhalten wurden:

| Latexzusatz | CSB-Wert (mg/l) |
|---|---|
| kein Zusatz | 2523 |
| Latex E | 372 |
| Latex G | 464 |

Beispiel 5

Reinigung eines mit Tensiden verunreinigten Wassers

Ein Wasser, das 1000 ppm eines Nonylphenols mit 4 Ethylenoxid-Einheiten pro Molekül enthielt, wurde wie in Beispiel 1 angegeben behandelt. Es wurden folgende Abwasserwerte ermittelt:

| Latexzusatz | CSB-Wert (mg/l) |
|---|---|
| kein Zusatz | 2973 |
| Latex A | 429 |
| Latex C | 154 |
| Latex D | 127 |
| Latex E | 184 |
| Latex F | 127 |
| Latex G | 425 |

Beispiel 6

Reinigung eines mit einem natürlichen Öl verunreinigten Wassers

Ein Wasser, das 1000 ppm Sojaöl enthielt wurde wie in Beispiel 1 angegeben behandelt, wobei folgende Abwasserwerte ermittelt wurden:

| Latexzusatz | CSB-Wert (mg/l) |
|---|---|
| kein Zusatz | 3287 |
| Latex A | 83 |
| Latex C | 92 |
| Latex D | 31 |
| Latex E | 54 |
| Latex F | 72 |
| Latex G | 31 |

Beispiel 7

Reinigung eines mit fein dispergiertem Ton verunreinigten Wassers

Ein Wasser, das pro Liter 1 g Bentonit in fein suspendierter Form enthielt, wurde wie in Beispiel 1 beschrieben behandelt. Mit Latex F und Latex G wurde jeweils eine klare, von Bentonit freie Wasserphase erhalten.

Beispiel 8

Reinigung eines Abwassers aus der Papierfabrikation

Ein Abwasser aus einer Papierfabrik, welches durch Huminsäuren dunkelbraun gefärbt war, wurde wie in Beispiel 1 beschrieben behandelt. Es wurde ein Abwasser erhalten, das nicht mehr dunkelbraun, sondern nur noch dunkelgelb gefärbt war. Es wurden folgende Extinktionswerte in einem Photometer bei 480 $\mu$m gemessen:

| Latexzusatz | Extinktion |
|---|---|
| kein Zusatz | 1,644 |
| Latex A | 0,625 |
| Latex E | 0,703 |

Beispiel 9

Abwasserreinigung durch Fällung eines anionischen Latex mit einem kationischen Latex

100 g eines Abwassers, das 1000 ppm organische Verunreinigungen enthielt, wurden mit 0,2 g eines kationischen Latex versetzt, der durch Polymerisation von 58 Teilen Styrol, 38 Teilen Butadien und 4 Teilen eines kationische Gruppen tragende Vinylmonomeren erhalten worden war (Feststoffgehalt 50 Gew.-%). Es wurde 5 Minuten gerührt und anschließend 0,1 g des Latex E zugesetzt. Folgende Ergebnisse wurden erhalten:

| Art der org. Verunreinigung im Abwasser | TOC (mg/l) | |
|---|---|---|
| | ohne Latex Zusätze | mit Latex Zusätzen |
| Nonylphenol mit 4 Ethylenoxid-Einheiten pro Molekül | 580 | 41 |
| Kondensat aus der Gasförderung | 400 | 32 |

**Patentansprüche**

1.  Verfahren zur Entfernung von dispersen Phasen aus Abwässern, dadurch gekennzeichnet, daß man dem Abwasser durch Polymerisation vinylhaltiger Monomerer hergestellte Kautschuk-Latices und mindestens 2-wertige Kationen und/oder positive Ladungen tragende Kautschuk-Latices zufügt.

2.  Verfahren nach Anspruch 1, dadurch gekennzeichnet, daß es sich bei den durch Polymerisation vinylhaltiger Monomerer hergestellte Kautschuk-Latices um nach bekannten Verfahren polymerisierte vinylhaltige Monomere handelt.

3.  Verfahren nach Ansprüchen 1 uns 2, dadurch gekennzeichnet, daß es sich bei den durch Polymerisation vinylhaltiger Monomerer hergestellten Kautschuk-Latices um solche handelt, die Styrol enthaltende Copolymerisate enthalten, die zusätzlich Carboxylgruppen in Form von Alkali- und/oder Aminsalzen aufweisen.

4.  Verfahren nach Ansprüchen 1 bis 3, dadurch gekennzeichnet, daß die durch Polymerisation vinylhaltiger Monomerer hergestellten Kautschuk-Latices Butadien-Styrol-Acryl/Methacryl-Copolymerisate enthalten, die 0 bis 18 Gew.-% Styrol, 0,1 bis 20 Gew.-% Acryl und/oder Methacrylsäureeinheiten und 20 bis 90 Gew.-% Butadien enthalten.

5.  Verfahren nach Ansprüchen 1 bis 4, dadurch gekennzeichnet, daß man mindestens 2-wertige Kationen in Form von Magnesiumchlorid, Magnesiumsulfat, Calciumchlorid, Eisen(II)-sulfat, Eisen(II)-chlorid, Aluminiumsulfat, Alkalialuminiumalaunen, Alkalieisenalaunen und/oder Aluminiumchlorid und/oder als kationisch geladene Latices solche einsetzt, die Butadien-Homopolymerisate oder Copolymerisate aus Butadien, Styrol und/oder Acrylnitril enthalten, wobei die kationischen Ladungen durch Einpolymerisation kationischer Gruppen tragender Vinylmonomerer erzeugt worden sind.

6.  Verfahren nach Ansprüchen 1 bis 5, dadurch gekennzeichnet, daß es sich bei der zu entfernden dispersen Phase um Tone, Cellulosefasern, Pigmente, Kohleteilchen, aromatische, aliphatische und/oder araliphatische Kohlenwasserstoffe, natürliche und/oder synthetische Öle, Fette und Ester, Polypropylenoxide, Tetrahydrofuranpolymerisate, polymerisierte α-Olefinepoxide, polymerisierte Styrolepoxide, Ethylenoxid enthaltende Mischpolymerisate und/oder Emulgatoren handeln.

7. Verfahren nach Ansprüchen 1 bis 6, daurch gekennzeichnet, daß es sich bei den aufzuarbeitenden Abwässern um Kühlschmierstoffemulsionen, Walzöle, Polieröle, zur Blechentfettung eingesetzte Prozeßflüssigkeiten, Abwässer aus Lackiereien und/oder Färbereien und/oder Abwässern aus der Papierherstellung handelt.

8. Verfahren nach Ansprüchen 1 bis 7, dadurch gekennzeichnet, daß das zu reinigende Abwasser weniger als 1 Gew.-% einer dispersen Phase enthält.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | chemical engineering, week x7,abstr.no.11796x/07 & jp,A,50 041 354 (SUMITOMO CHEMICAL KK), 15,APRIL,1975<br>--- | 1-5 | C02F1/54<br>D21H17/41 |
| A | DE-A-2 208 748 (DURA TUFTING GMBH)<br>* page 2, line 10 - line 18 *<br>* page 3, line 28 - page 4, line 4 *<br>--- | 1,3-5 | |
| A | EP-A-0 376 813 (NORSOLOR S.A.)<br>* the whole document *<br>--- | 1,2 | |
| A | EP-A-0 341 357 (CALGON CORPORATION)<br>* the whole document *<br><br>----- | 1-8 | |

**TECHNICAL FIELDS SEARCHED (Int. Cl.5)**

C02F
D21H

The present search report has been drawn up for all claims

| Place of search | Date of completion of the search | Examiner |
|---|---|---|
| THE HAGUE | 17 AUGUST 1992 | GONZALEZ ARIAS,M.L. |

EPO FORM 1503 03.82 (P0401)